# EUROPÄISCHE PATENTSCHRIFT

(11) **EP 3 969 215 B1**
(45) Veröffentlichungstag und Bekanntmachung des Hinweises auf die Patenterteilung: **08.01.2025**
(21) Anmeldenummer: 20718136.3
(22) Anmeldetag: 25.03.2020
(51) Int. Cl.: B23C 5/10, B23P 15/00, B23C 5/24, F16C 33/46, F16C 33/49, F16C 23/08, B23C 5/22

(54) **FRÄSWERKZEUG UND VERFAHREN ZUR HERSTELLUNG EINES WÄLZLAGERKÄFIGS**
MILLING TOOL AND METHOD FOR PRODUCING A ROLLING BEARING CAGE
OUTIL DE FRAISAGE ET PROCÉDÉ DE FABRICATION D'UNE CAGE DE PALIER À ROULEMENT

(30) Priorität: 13.05.2019 DE 102019112405
(43) Veröffentlichungstag der Anmeldung: 23.03.2022
(73) Patentinhaber: Schaeffler Technologies AG & Co. KG, 91074 Herzogenaurach (DE)
(72) Erfinder: SANDERS, Bernhard, 90574 Roßtal (DE); CONRAD, Stefan, 500269 Brasov (RO)
(86) Internationale Anmeldenummer: PCT/DE2020/100235
(87) Internationale Veröffentlichungsnummer: WO 2020/228882

(56) Entgegenhaltungen:
- EP-A1- 1 816 362
- EP-A2- 2 093 012
- CN-A- 106 270 691
- DE-A1- 102007 057 550
- DE-A1- 102011 003 211
- DE-B4- 10 340 493
- DE-U1- 29 911 894
- US-A1- 2022 088 819
- US-A1- 2022 118 531

## Beschreibung

Die Erfindung betrifft ein Fräswerkzeug nach dem Oberbegriff des Anspruchs 1. Ferner betrifft die Erfindung ein Verfahren zur Herstellung eines als Kammkäfig ausgebildeten Wälzlagerkäfigs. Ein Werkzeug gemäß dem Oberbegriff des Anspruchs 1 ist aus der DE29911894U bekannt.

Ein gattungsgemäßes Fräswerkzeug ist beispielsweise aus der DE 17 52 586 C3 bekannt. Es handelt sich hierbei um einen Walzen- oder Profilfräser. Dabei ist an einer Frässpindel mittels einer Passfeder ein Grundkörper befestigt. Am Grundkörper wiederum ist ein Schneidenring befestigt, in welchem einzelne Wendeschneidplatten in einstellbarer Weise gehalten sind. Der Walzen- oder Profilfräser nach der DE 17 52 586 C3 soll insbesondere zur Bearbeitung ebener oder profilierter Flächen, beispielsweise von Führungsbahnen, geeignet sein.

Ein weiterer Fräser mit Wendeschneidplatten ist in der DE 10 2016 217 533 A1 offenbart. In diesem Fall ist eine definierte Weitertaktung von Schneidplatten vorgesehen.

In der DE 10 2012 212 440 A1 ist ein Bohrwerkzeug beschrieben, welches insbesondere zur Bearbeitung von Bauteilen aus einer Titanlegierung geeignet sein soll. An einer Stirnseite des Bohrwerkzeugs befindet sich eine Mehrzahl an Schneidplatten.

Die EP 1 289 702 B1 beschreibt ein Verfahren zum Fräsen von Tannenbaumnuten. Hierbei soll zunächst eine Vorform in drei Bearbeitungsstufen durch mit Hartmetall bestückte Schaftfräser gefräst werden.

Die DE 10 2017 118 738 A1 offenbart ein Fräswerkzeug sowie ein Verfahren zur Herstellung eines Kammkäfigs. Durch das Fräswerkzeug wird eine Hauptschneide und eine Nebenschneide bereitgestellt, wobei eine Schnittkante der Hauptschneide und/oder Nebenschneide unterbrochen ist, sodass mindestens eine Freistelle gebildet ist.

Die DE 200 11 894 U1 beschreibt ein umlaufendes Schneidwerkzeug mit einer Längsdrehachse und einem Schneidkopf mit mehreren Schneideinsätzen. Die betriebsfähigen Schneidkanten der Schneideinsätze liegen im Wesentlichen in einer ebene senkrecht zur Längsdrehachse.

Die EP 2 093 012 A2 offenbart ein Verfahren und ein Werkzeug zur Annulusbearbeitung eines Gasturbinenrotors mit integral angeformten Schaufeln. Dabei wird ein zylindrischer Fräskopf mit stirnseitiger Schneidfläche eingesetzt.

Der Erfindung liegt die Aufgabe zugrunde, die spanende Bearbeitung von Kammkäfigen für Wälzlager, insbesondere Pendelrollenlager, zu rationalisieren.

Diese Aufgabe wird erfindungsgemäß gelöst durch ein Fräswerkzeug mit den Merkmalen des Anspruchs 1. Ebenso wird die Aufgabe gelöst durch ein Verfahren zur Herstellung eines als Kammkäfig ausgebildeten Wälzlagerkäfigs gemäß Anspruch 6. Im Folgenden im Zusammenhang mit dem Herstellungsverfahren erläuterte Ausgestaltungen und Vorteile der Erfindung gelten sinngemäß auch für das Bearbeitungswerkzeug, das heißt Fräswerkzeug, und umgekehrt.

Das Fräswerkzeug umfasst in an sich bekannter Grundkonzeption einen Grundkörper, an welchem Schneidplatten befestigt sind, welche jeweils mindestens eine Schneidkante aufweisen. Erfindungsgemäß beschreiben die Schneidkanten insgesamt eine Tonnenform, wobei eine erste Gruppe an Schneidplatten an einer ebenen Stirnfläche des Grundkörpers und eine zweite Gruppe an Schneidplatten an einer tonnenförmig gewölbten Mantelfläche des Grundkörpers angeordnet ist.

Die Tonnenform, welche insgesamt durch die Schneidkanten beschrieben wird, stellt eine Annäherung an die Form der in dem Kammkäfig zu führenden Wälzkörper, nämlich Tonnenrollen, dar. Auf diese Weise werden mehrere spanabhebende Bearbeitungsprozesse, wie sie beispielsweise in der genannten EP 1 289 702 B1 beschrieben sind, eingespart.

Allgemein umfasst die spanabhebende Bearbeitung, mit welcher der Kammkäfig hergestellt wird, folgende Schritte:
- Ein Käfigrohlings, insbesondere aus Buntmetall, welcher bereits die Grundform des späteren Kammkäfigs hat, wird bereitgestellt,
- Durchführung eines ersten spanabhebenden Bearbeitungsprozesses, wobei mittels eines Fräswerkzeugs nach Anspruch 1 eine tonnenförmige, Aufnahmeöffnung im Käfigrohling erzeugt wird,
- Nachbearbeitung der tonnenförmigen Aufnahmeöffnung in einem zweiten spanabhebenden Bearbeitungsprozess, so dass die Aufnahmeöffnung zur Führung einer Tonnenrolle als Wälzkörper geeignet ist.

In bevorzugter Verfahrensführung wird bereits im ersten spanabhebenden Bearbeitungsprozess der Taschenboden der herzustellenden Wälzkörpertasche auf Fertigmaß bearbeitet. Dagegen wird im zweiten spanabhebenden Bearbeitungsprozess ausschließlich die tonnenförmige Wandung der Aufnahmeöffnung, das heißt späteren Wälzkörpertasche, bearbeitet. Zu diesem Zweck wird im ersten spanabhebenden Bearbeitungsprozess beispielsweise mit einer Schnittzugabe von 0,5 mm gearbeitet.

Bei den Schneidplatten des Fräswerkzeugs handelt es sich in bevorzugter Ausgestaltung um Wendeschneidplatten. Die Wendeschneidplatten können aus beliebigen Werkstoffen, die üblicherweise für die Herstellung von Schneidplatten verwendet werden, beispielsweise aus Hartmetall oder aus keramischen Werkstoffen, gefertigt sein. Um eine präzise Fertigbearbeitung des Taschenbodens bereits im ersten spanabhebenden Bearbeitungsprozess, das heißt in dem mit dem erfindungsgemäßen Fräswerkzeug durchgeführten Bearbeitungsprozess, zu ermöglichen, sind vorzugsweise die Schneidplatten an der Stirnfläche des Grundkörpers einstellbar. Was Möglichkeiten zur Einstellung von Schneidplatten eines Zerspanungswerkzeugs betrifft, wird ergänzend auf die DE 103 40 493 B4 hingewiesen.

Im Unterschied zu den Schneidplatten an der Stirnfläche des Grundkörpers, mit welchen der Taschenboden der Wälzkörpertasche erzeugt wird, sind die Schneidplatten an der Mantelfläche des Fräswerkzeugs gemäß einer möglichen, einfach aufgebauten Ausgestaltung mit unveränderbarer Einstellung am Grundkörper fixiert. Gemäß einer alternativen, etwas komplexeren Ausgestaltung sind auch die Schneidplatten an der Mantelfläche des Fräswerkzeugs einstellbar. In beiden Fällen weicht die geometrische Gestaltung der Schneidplatten an der gewölbten Mantelfläche des Fräswerkzeugs vorzugsweise von der Gestaltung der stirnseitigen Schneidplatten ab.

Das Fräswerkzeug wird vorzugsweise zur Bearbeitung eines Käfigs eines zweireihigen Pendelrollenlagers verwendet. Derartige Pendelrollenlager kommen beispielsweise in Industrieanlagen sowie in Windkraftanlagen zum Einsatz. Beispielhaft wird in diesem Zusammenhang auf die DE 10 2011 078 840 A1 hingewiesen.

Nachfolgend wird ein Ausführungsbeispiel der Erfindung anhand einer Zeichnung näher erläutert. Hierin zeigen, jeweils in schematisierter Darstellung:
- Fig. 1: einen ersten Bearbeitungsschritt zur Herstellung eines als Kammkäfig ausgebildeten Wälzlagerkäfigs,
- Fig. 2: einen zweiten Bearbeitungsschritt zur Herstellung des Wälzlagerkäfigs.

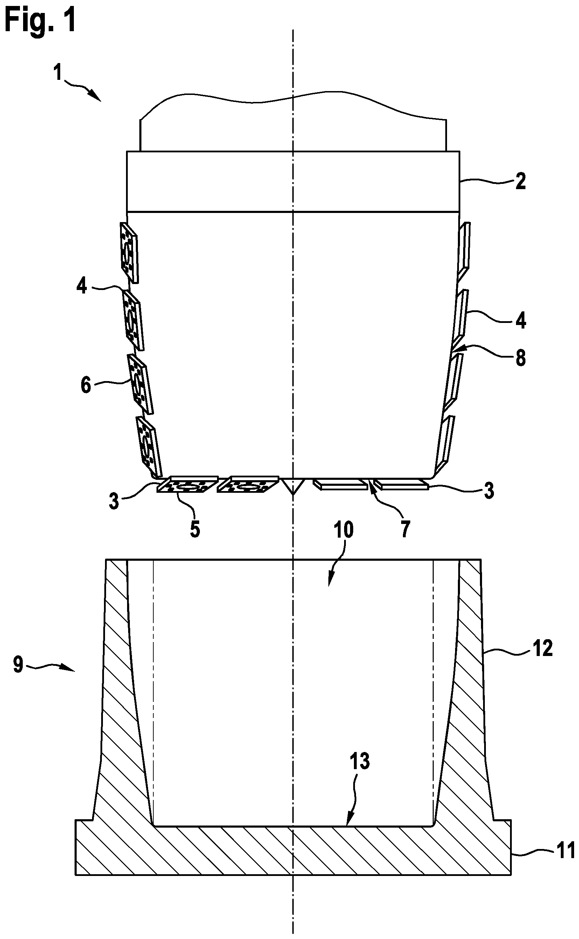

Ein in Figur 1 vereinfacht dargestelltes Fräswerkzeug 1 ist als Profilfräser mit einem im Wesentlichen walzenförmigen, insgesamt tonnenförmig profilierten Grundkörper 2 ausgebildet. An der ebenen, mit 7 bezeichneten Stirnfläche des Grundkörpers 2 sind mehrere Schneidplatten 3, nämlich Wendeschneidplatten, befestigt. An der gewölbten, mit 8 bezeichneten Mantelfläche des Grundkörpers 2 sind Schneidplatten 4 befestigt. Die Form der Schneidplatten 4 stimmt nicht notwendigerweise mit der Form der Schneidplatten 3 überein. Schneidkanten der stirnseitigen Schneidplatten 3 sind mit 5, Schneidkanten der Schneidplatten 4 mit 6 bezeichnet.

Durch die Gesamtheit der Schneidkanten 6 an der tonnenförmigen Mantelfläche 8 sowie der Schneidkanten 5 an der Stirnfläche 7 des Fräswerkzeugs 1 ist insgesamt eine Tonnenform beschrieben, welche mit guter Näherung der Tonnenform von Wälzkörpern, das heißt Tonnenrollen, entspricht, die in einem herzustellenden Kammkäfig 16 für ein zweireihiges Pendelrollenlager zu führen sind.

Bei der Herstellung des Wälzlagerkäfigs 16, das heißt Kammkäfigs, wird von einem Käfigrohling 9 ausgegangen, wie er in Figur 1 veranschaulicht ist. In einem ersten spanabhebenden Bearbeitungsprozess wird mittels des Fräswerkzeugs 1 eine tonnenförmige Aufnahme 10 im Käfigrohling 9 erzeugt. Der Käfigrohling 9 weist einen Käfigring 11 auf, der auch beim späteren Kammkäfig 16 in weitgehend unveränderter Form vorhanden ist. Vom Käfigring 11 gehen in Axialrichtung einzelne Stege 12 aus, zwischen welchen tonnenförmige Aufnahmeöffnungen 10, das heißt die späteren Wälzkörpertaschen, gebildet sind.

Bereits im ersten spanabhebenden Bearbeitungsprozess wird ein mit 13 bezeichneter Taschenboden der tonnenförmigen Aufnahme 10 auf Fertigmaß bearbeitet. Die gewölbten Wandungen der tonnenförmigen Aufnahme 10 werden dagegen zunächst mit einem Aufmaß von beispielsweise 0,5 mm durch das Fräswerkzeug 1 hergestellt. Die mit dem Fräswerkzeug 1 durchgeführte Bearbeitung stellt von daher eine Vorbearbeitung des Käfigrohlings 9 dar.

Trotz des Charakters der mit dem Fräswerkzeug 1 durchgeführten Bearbeitung als Vorbearbeitung ist die damit erzielte geometrische Präzision, was den Taschenboden 13 betrifft, an dieser Stelle bereits ausreichend hoch, um von einer spanabhebenden Nachbearbeitung absehen zu können. Um die geforderte Präzision zu erreichen, sind die an der Stirnfläche 7 angeordneten Schneidplatten 3 einstellbar.

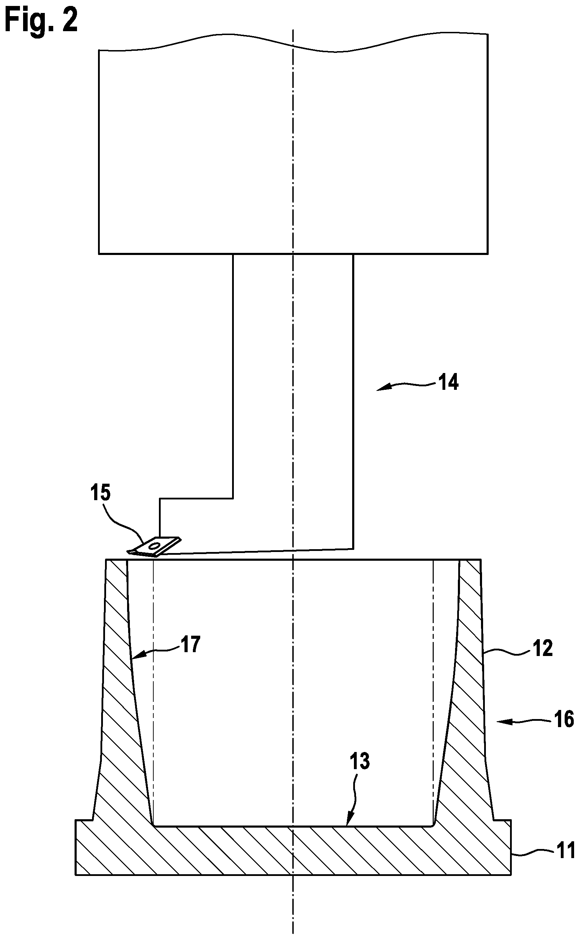

Im Unterschied zu den stirnseitigen Schneidplatten 3 sind die Schneidplatten 4 in fixer, nicht einstellbarer Position am Grundkörper 2 gehalten. Zur Fertigbearbeitung der mit 17 bezeichneten im Querschnitt sphärisch gekrümmten Taschenwandung wird eine in Figur 2 lediglich andeutungsweise dargestellte Bearbeitungsvorrichtung 14 verwendet, welche auch als Aussteuerwerkzeug bezeichnet wird. Erkennbar ist eine Schneidplatte 15, welche der Bearbeitungsvorrichtung 14 zuzurechnen ist und in einem zweiten spanabhebenden Bearbeitungsprozess, in welchem ausschließlich die Taschenwandung 17 bearbeitet wird, verwendet wird. Der zweite spanabhebende Bearbeitungsprozess kann entweder in derselben Aufspannung wie der erste spanabhebende Bearbeitungsprozess oder in einer gesonderten Aufspannung erfolgen.

In beiden Fällen ist durch die gute Annäherung der Form des Fräswerkzeugs 1 an das Profil der im Kammkäfig 16 zu führenden Wälzkörper eine besonders rationelle spanabhebende Bearbeitung gegeben. Der Kammkäfig 16 ist insbesondere aus einer Buntmetalllegierung gefertigt.

### Bezugszeichenliste

1 Fräswerkzeug
2 Grundkörper
3 Schneidplatte an der Stirnfläche
4 Schneidplatte an der Mantelfläche
5 Schneidkante
6 Schneidkante
7 Stirnfläche
8 Mantelfläche
9 Käfigrohling
10 Aufnahmeöffnung
11 Käfigring
12 Steg
13 Taschenboden
14 Bearbeitungsvorrichtung
15 Schneidplatte
16 Kammkäfig, Wälzlagerkäfig
17 Taschenwandung

## Patentansprüche

1. Fräswerkzeug (1), mit einem Grundkörper (2), an welchem Schneidplatten (3, 4) befestigt sind, welche jeweils mindestens eine Schneidkante (5, 6) aufweisen, **dadurch gekennzeichnet, dass** die Schneidkanten (5, 6) insgesamt eine Tonnenform beschreiben, wobei eine erste Gruppe an Schneidplatten (3) an einer ebenen Stirnfläche (7) des Grundkörpers (2) und eine zweite Gruppe an Schneidplatten (4) an einer tonnenförmig gewölbten Mantelfläche (8) des Grundkörpers (2) angeordnet ist.

2. Fräswerkzeug (1) nach Anspruch 1, **dadurch gekennzeichnet, dass** die Schneidplatten (3, 4) als Wendeschneidplatten ausgebildet sind.

3. Fräswerkzeug (1) nach Anspruch 1 oder 2, **dadurch gekennzeichnet, dass** die Schneidplatten (3), welche an der Stirnfläche (7) des Grundkörpers (2) angeordnet sind, einstellbar sind.

4. Fräswerkzeug (1) nach Anspruch 3, **dadurch gekennzeichnet, dass** die Schneidplatten (4) an der Mantelfläche (8) mit einer unveränderbaren Einstellung am Grundkörper (2) fixiert sind.

5. Fräswerkzeug (1) nach Anspruch 3, **dadurch gekennzeichnet, dass** die Schneidplatten (4) an der Mantelfläche (8) ebenfalls einstellbar sind.

6. Verfahren zur Herstellung eines als Kammkäfig (16) ausgebildeten Wälzlagerkäfigs, mit folgenden Schritten:
- Bereitstellung eines Käfigrohlings (9),
- Durchführung eines ersten spanabhebenden Bearbeitungsprozesses, wobei mittels eines Fräswerkzeugs (1) nach Anspruch 1 eine tonnenförmige Aufnahmeöffnung (10) im Käfigrohling (9) erzeugt wird,
- Nachbearbeitung der tonnenförmigen Aufnahmeöffnung (10) in einem zweiten spanabhebenden Bearbeitungsprozess.

7. Verfahren nach Anspruch 6, **dadurch gekennzeichnet, dass** im ersten spanabhebenden Bearbeitungsprozess ein Taschenboden (13) der Aufnahmeöffnung (10) auf Fertigmaß bearbeitet wird, wogegen im zweiten spanabhebenden Bearbeitungsprozess ausschließlich eine im Querschnitt sphärisch gekrümmte Taschenwandung (17) der Aufnahmeöffnung (10) bearbeitet wird.

## Claims

1. A milling tool (1) having a main body (2) to which cutting inserts (3, 4) are fastened, each having at least one cutting edge (5, 6), **characterised in that** the cutting edges (5, 6) as a whole describe a barrel shape, wherein a first group of cutting inserts (3) is arranged on a flat end face (7) of the main body (2) and a second group of cutting inserts (4) is arranged on a barrel-shaped curved outer surface (8) of the main body (2).

2. The milling tool (1) according to claim 1, **characterised in that** the cutting inserts (3, 4) are formed as indexable cutting inserts.

3. The milling tool (1) according to claim 1 or 2, **characterised in that** the cutting inserts (3), which are arranged on the end face (7) of the main body (2), are adjustable.

4. The milling tool (1) according to claim 3, **characterised in that** the cutting inserts (4) are fixed to the lateral face (8) with an unchangeable setting on the main body (2).

5. The milling tool (1) according to claim 3, **characterised in that** the cutting inserts (4) on the lateral face (8) are also adjustable.

6. A method for producing a rolling bearing cage designed as a comb-type cage (16), comprising the following steps:
- providing a cage blank (9),
- carrying out a first machining process, a barrel-shaped opening (10) being produced in the cage blank (9) by means of a milling tool (1) according to claim 1,
- post-processing of the barrel-shaped opening (10) in a second machining process.

7. The method according to claim 6, **characterised in that** in the first machining process, a pocket bottom (13) of the opening (10) is machined to the finished size, whereas a pocket wall (17) of the opening (10) with a spherically curved cross-section is machined exclusively in the second machining process.

## Revendications

1. Outil de fraisage (1), comportant un corps de base (2) sur lequel sont fixées des plaques de coupe (3, 4), qui présentent respectivement au moins une arête de coupe (5, 6), **caractérisé en ce que** les arêtes de coupe (5, 6) décrivent globalement une forme de tonneau, un premier groupe de plaques de coupe (3) étant agencé sur une face avant plane (7) du corps de base (2) et un second groupe de plaques de coupe (4) étant agencé sur une surface externe incurvée (8) en forme de tonneau du corps de base (2).

2. Outil de fraisage (1) selon la revendication 1, **caractérisé en ce que** les plaques de coupe (3, 4) sont conçues comme des plaquettes de coupe amovibles.

3. Outil de fraisage (1) selon la revendication 1 ou 2, **caractérisé en ce que** les plaques de coupe (3) agencées sur la face avant (7) du corps de base (2) sont réglables.

4. Outil de fraisage (1) selon la revendication 3, **caractérisé en ce que** les plaques de coupe (4) sont fixées sur la surface externe (8) avec un réglage invariable sur le corps de base (2).

5. Outil de fraisage (1) selon la revendication 3, **caractérisé en ce que** les plaques de coupe (4) sont également réglables sur la surface externe (8).

6. Procédé destiné à fabriquer une cage de palier à roulement conçue comme une cage de type peigne (16), comportant les étapes suivantes :
- mise à disposition d'une ébauche de cage (9),
- réalisation d'un premier processus d'usinage par enlèvement de copeaux, une ouverture de réception (10) en forme de tonneau étant créée dans l'ébauche de cage (9) au moyen d'un outil de fraisage (1) selon la revendication 1,
- post-traitement de l'ouverture de réception (10) en forme de tonneau dans un second processus d'usinage par enlèvement de copeaux.

7. Procédé selon la revendication 6, **caractérisé en ce que,** dans le premier processus d'usinage par enlèvement de copeaux, un fond de poche (13) de l'ouverture de réception (10) est usiné aux dimensions finies, tandis que dans le second processus d'usinage par enlèvement de copeaux, seule une paroi de poche (17) de l'ouverture de réception (10) dont la section transversale présente une courbure sphérique est usinée.
